# EUROPEAN PATENT SPECIFICATION

(11) **EP 3 640 882 B1**
(45) Date of publication and mention of the grant of the patent: **23.04.2025**
(21) Application number: 19203348.8
(22) Date of filing: 15.10.2019
(51) Int. Cl.: G06Q 30/06, G07F 17/00, G07F 15/00

(54) **LEASE MANAGEMENT METHOD AND SYSTEM OF ELECTRIC POWER MOTION APPARATUS**
LEASINGVERWALTUNGSVERFAHREN UND SYSTEM FÜR EINE STROMBEWEGUNGSVORRICHTUNG
PROCÉDÉ DE GESTION DE LOCATION ET SYSTÈME D'APPAREIL DE MOUVEMENT D'ALIMENTATION ÉLECTRIQUE

(30) Priority: 15.10.2018 CN 201811197192; 08.04.2019 US 201916378143
(43) Date of publication of application: 22.04.2020
(73) Proprietor: Yujet International Corporation Limited, Central Hong Kong (CN)
(72) Inventor: TIAN, Yu, North Point (HK)
(74) Representative: MERH-IP Matias Erny Reichl Hoffmann Patentanwälte PartG mbB

(56) References cited:
- EP-A1- 1 067 498
- EP-A1- 1 602 574
- EP-A1- 3 264 375
- CN-A- 108 189 978
- CN-A- 108 638 865
- CN-B- 102 377 220
- CN-U- 207 396 696

## Description

### CROSS-REFERENCE TO RELATED APPLICATIONS

This application claims priority to China Pat. No. 201811197192.4 filed on October 15, 2018.

### TECHNICAL FIELD

Embodiments of the present invention relate to the technical field of lease management, and in particular, relate to a lease management method and system of an electric power motion apparatus.

### BACKGROUND

Surfing is typically a sports item which depends on sea waves and struggles against the sea waves by using high technical skills and good balancing capability of a surfer. In the sea, a surfer has a place suitable for sea waves to lie on his or her back or sit on a surfboard to wait. When suitable sea waves gradually approach, the surfer adjusts the direction of the head of the surfboard, and lie on the back on the surfboard to paddle along the direction of the sea waves, which provides a sufficient speed for the surfboard such that the surfboard maintains at the front of the sea waves. When the sea waves push the surfboard to slide, the surfer stands up, with two legs naturally standing up and the knees being slightly bent. In this way, the surfer controls the way of the surfboard by using the center of gravity of the body, the shoulder and the rear legs. In addition, the surfing is further typically implemented depending on a force given by a boat, which is referred to as traction-based surfing.

With the development of science and technology, in recent years, electric water scooters are come into being. The electric water sliding board is practiced by adding an electric power apparatus on a conventional scooter, wherein the scooter is driven by a force provided by the electric power apparatus. In the electric water scooter, the direction still needs to be controlled based on the center of gravity of the body.

Transport sharing economy is now extending from vehicles, bikes and locomotives to various fields including the electric water scooters. However, with respect to lease of electric scooters currently, in the course of practicing the present invention, the inventors have found that the prior art at least has the following problems:

Water electric scooters need power supplied by a large-capacity battery. With respect to rechargeable batteries commonly used currently, battery states may not be checked (for example, a remaining power amount and a cycle count), such that the maintenance of the batteries is very complicated. Unlike a fuel product to which fuel may be added any time, with respect to the battery, a battery measurement device needs to be carried by a user. However, the conventional battery measurement device may only acquire voltage information of the battery. The voltage information of the battery does not directly represent the remaining power amount of the battery. Management personnels need to determine based on their skills whether the power amount of the battery is sufficient for use for a next time period. If the power amount is insufficient, the battery needs to be replaced.

In addition, the battery of the water electric scooter is generally a power battery which has a large size and weight and thus may not be carried by the user. As such, if the battery needs to be replaced, the user needs to return to the warehouse to take a new battery. This process consumes a large amount of time, and consequently a large amount of maintenance personnels are desired. A large amount of water electric scooters need to be maintained at a lease station, and the maintenance workload increases by geometric progression with the number of scooters maintained at the lease station, which becomes a challenge in promotion of the scooters in the current large-scale lease market. Even if some batteries are equipped with power amount indication, manual operations are needed. In addition, the batteries may only be replaced when the scooters return to the lease station or the maintenance personnels of the scooters need to carry by themselves a large number of batteries for replacement. Since the batteries are heavy, it is very troublesome. If the batteries are insufficient, the maintenance personnels need to return to take more, which is time consuming.

Especially in the lease market, lease of the scooters needs to be carried out at a fixed site, such as the lease station. If the maintenance personnels are insufficient, the user needs to carry the heavy electric scooters. As a result, use of the scooters is difficult, and user experience is poor. EP 1 067 498 A1 relates to a shared vehicle system and to a method involving reserving vehicles with highest states of electrical charge. EP 3 264 375 A1 relates to a bicycle management system, comprising a mobile communication apparatus, a cloud end, a bicycle and an operation strategy center. CN 207 396 696 U relates to a lithium battery status collection and abnormal alarm equipment for an electric vehicle. CN 102 377 220 A relates to a charging control method for an electric vehicle, a charging monitoring control center and a car navigation device. EP 1 602 574 A1 relates to a remote control unmanned boat, which can be freely operated by remote control and a remote control device. CN 108 638 865 A relates to an electric vehicle voltage judgment driving distance system and a control method thereof.

It should be noted that the above description of the technical background is only intended to make the technical solutions of the present invention clearer and more complete, and to further facilitate understanding of the present invention by persons skill in the art. Although the technical solutions are elaborated in the background of the present invention, the above technical solutions shall not be considered as commonly known by persons skilled in the art.

### SUMMARY

In view of the above problem, embodiments of the present invention are intended to provide a lease management method and system of an electric power motion apparatus. According to the present invention, a battery state and location information of the electric power motion apparatus at a lease station may be monitored in real time, such that lease management of the electric power motion apparatus is simple and convenient, and hence user experience is improved. The invention is as defined in the independent claims 1 and 3.

Embodiments of the present invention provide a lease management system of an electric power motion apparatus. The system includes: a base station deployed at a lease station, an electric power motion apparatus connected to the base station by long-distance wireless communication, a smart terminal where a lease application is installed, and/or a cloud-end management platform. The base station is connected to the cloud-end management platform via a network, the base station is configured to acquire in real time lease information, a battery state and location information of the electric power motion apparatus at the lease station, and/or report the same to the cloud-end management platform; and/or the cloud-end management platform is configured to determine an idle time period of the electric power motion apparatus based on the lease information, calculate time for replacing a battery of the electric power motion apparatus based on the battery state, determine a location where the battery of the electric power motion to supply power for the electric power motion apparatus; the power unit is connected to the battery pack, and configured to propel the electric power motion apparatus and control a speed of the electric power motion apparatus under cooperation of the controller; and the lease control unit is connected to the power unit and the auxiliary steering unit, and configured to acquire a location information, an advancement direction and a battery state of the electric power motion apparatus, and configured to additionally adjust and control the electric power motion apparatus under cooperation of the auxiliary steering unit based on normal adjustment and control of a user; the lease control unit is comprising a communication module, a GPS-based positioning module, and a direction checking module; wherein the communication module is configured to carry out long-distance wireless communication with a base station, the GPS-based positioning module is configured to acquire the location information of the electric power motion apparatus, and the direction checking module is configured to acquire a direction angle of advancement of the electric power motion apparatus via a built-in direction sensor; checking, by the user, idle time periods of the electric power motion apparatus at a lease station via a lease application installed on a smart terminal, determining a lease time period, and/or reserving lease of the electric power motion apparatus; based on the lease reservation, unlocking, by the user, the electric power motion apparatus at the lease station via the lease application within the lease time period to acquire the electric power motion apparatus; in use of the electric power motion apparatus, acquiring, by a cloud-end management platform, lease information, a battery state and location information of the electric power motion apparatus at the lease station via a base station; when a remaining power amount of the electric power motion apparatus is insufficient, sending, by the cloud-end management platform, a prompt message to the user via the lease application, calculating time for replacing the battery of the electric power motion apparatus based on the battery state, determining a location where the battery of the electric power motion apparatus needs to be replaced based on the location information, and/or notifying the electric power motion apparatus whose battery needs to be replaced, and the time and location for replacing the battery to a manager of the lease station via the lease application; and based on the location information of the electric power motion apparatus, when the electric power motion apparatus is located outside a predefined lease range of the lease station, sending a return-to-lease-range prompt message to the user, and based on normal adjustment and control of the user, by using a lease control unit of the electric power motion apparatus, additionally adjusting an advancement direction of the electric power motion apparatus to face towards the lease station and additionally controlling the electric power motion apparatus to advance towards the lease station; and when the user returns the electric power motion apparatus via the lease application, enabling, by the cloud-end management platform, the electric power motion apparatus to self check via the base station, and terminating the lease of the electric power motion apparatus if a return condition is satisfied and payment is made.

Further, the method further includes: predefining the idle time periods and a reservation coefficient of the idle time periods via the lease application installed on the smart terminal, the reservation coefficient being defined based on big data indicative of busy degree of the lease station; wherein the big data indicative of busy degree of the lease station is data statistically collected by the cloud-end management platform regarding lease quantity and use frequency of the electric power motion apparatus within the lease time period at the lease station; and/or the number of electric power motion apparatuses that are leaseable at the lease station within the idle time periods in the lease application installed on the smart terminal is calculated by: multiplying the number of actual idle electric power motion apparatuses at the lease station by the reservation coefficient of the idle time periods.

Further, the method further includes: if the cloud-end management platform receives the lease reservation, reducing the number of electric power motion apparatus that are leaseable in the lease reservations within a corresponding idle time period; and if the cloud-end management platform receives cancellation of the lease reservation, increasing the number of electric power motion apparatuses that are leaseable in the lease reservations within the corresponding idle time period.

Further, the method further includes: within a predefined time duration in the lease time period, sending, by the cloud-end management platform, a lease reservation prompt message to the user via the lease application; after the user reaches the lease station, guiding, by the cloud-end management platform, the user to reach a closest electric power motion apparatus via the lease application based on location of the user and the location information of the electric power motion apparatus obtained in real time; arranging a lease identifier on the electric power motion apparatus, and/or scanning the lease identifier by the smart terminal when the user reaches the electric power motion apparatus; and/or unlocking the electric power motion apparatus and starting timing if it is determined via the lease application that the lease reservation is within the lease time period.

Further, the method further includes: in use of the electric power motion apparatus, based on use time of the electric power motion apparatus, sending a return prompt message to the user via the lease application when the predefined time duration before expiration of the lease time is reached; based on the location information of the electric power motion apparatus, when the electric power motion apparatus is located outside the lease range of the lease station, sending a return-to-lease-range prompt message to the user, and/or based on normal adjustment and control, by using a lease control unit, additionally adjusting an advancement direction of the
apparatus needs to be replaced based on the location information, and/or notify the electric power motion apparatus whose battery needs to be replaced, and/or the time and location for replacing the battery to a manager of the lease station via the lease application. When, based on the location information of the electric power motion apparatus, the electric power motion apparatus is located outside a predefined lease range of the lease station the cloud-end management platform is configured to send a return-to-lease-range prompt message to a user, and further, based on normal adjustment and control of the user, by using a lease control unit of the electric power motion apparatus, the advancement direction of the electric power motion apparatus is additionally adjusted to face towards the lease station such that the electric power motion apparatus advances towards the lease station. The smart terminal where the lease application is installed is connected to the cloud-end management platform via the network; the user checks idle time periods of the electric power motion apparatus at the lease station via the lease application and reserves lease, and/or returns the electric power motion apparatus via the lease application; and/or the manager of the lease station checks in real time the lease information, the battery state and the location information of the electric power motion apparatus at the lease station via the lease application, replaces the battery of the electric power motion apparatus based on the time and location notified by the cloud-end management platform, and/or performs lease management and maintenance of the electric power motion apparatus at the lease station.

Further, the electric power motion apparatus comprises a power unit. The power unit includes a power module and a power module lock; wherein when the user unlocks the electric power motion apparatus within a lease duration, the power module lock is opened to enable the power module, and when the user returns the electric power motion apparatus, the power module lock is closed to disable the power module.

Further, the electric power motion apparatus further includes a lease control unit, the lease control unit comprising a communication module, a GPS-based positioning module and a direction checking module. The communication module is configured to carry out long-distance wireless communication with the base station, the GPS-based positioning module is configured to acquire the location information of the electric power motion apparatus, and the direction checking module is configured to acquire a direction angle of advancement of the electric power motion apparatus via a built-in direction sensor.

Embodiments of the present invention further provide a management method of an electric power motion apparatus. The method includes: providing an electric power motion apparatus configured to be used on the water comprising: a battery pack, a power unit, a lease control unit, an auxiliary steering unit, and a controller; wherein the battery pack is configured electric power motion apparatus to face towards the lease station and/or additionally controlling the electric power motion apparatus to advance towards the lease station; and/or based on the location information and the battery state of the electric power motion apparatus, if the remaining power amount of the electric power motion apparatus is less than or equal to a sum of a power amount for returning to the lease station and a predefined remaining power amount, sending a prompt message indicative of an insufficient power amount to the user, and/or based on normal adjustment and control, additionally controlling the electric power motion apparatus to decelerate to a speed in a power saving mode, and additionally adjusting the advancement direction of the electric power motion apparatus to face towards the lease station such that the electric power motion apparatus advances towards the lease station.

Further, the calculating time for replacing a battery of the electric power motion apparatus based on the battery state includes: based on a power amount when the timing is started and/or the use time, calculating, by the cloud-end management platform, the remaining power amount of the electric power motion apparatus, and calculating the time for replacing the battery based on the remaining power amount.

Further, the enabling the electric power motion apparatus to self check via the base station and terminating the lease of the electric power motion apparatus if a return condition is satisfied and payment is made when the user returns the electric power motion apparatus via the lease application includes: when the electric power motion apparatus returns to the lease station and is returned via the lease application, upon receiving a return request, sending, by the cloud-end management platform a return instruction to the electric power motion apparatus such that the electric power motion apparatus performs self-check and terminates the timing, wherein the self-check comprises checking the battery state and integrity of the electronic part; and if the return condition is satisfied, determining the use time based on the time when the timing is started and the time when the timing is terminated, calculating fees based on the use time, paying the fees and terminating the lease of the electric power motion apparatus.

Accordingly, in the lease management method and system of the electric power motion apparatus according to the embodiments of the present invention, with respect to the system, a base station is deployed at a lease station, an electric power motion apparatus at the lease station is connected to the base station by long-distance wireless communication, the base station is connected to a cloud-end management platform via a network, and thus user lease and lease management of the electric power motion apparatus at the lease station are practiced out via a lease application. In this way, the problems that operation cost of the electric power motion apparatuses currently using large power batteries in large-scale lease operation is high and user experience is poor are addressed. Lease information, battery state and location information of each electric power motion apparatus at a lease station may be acquired in real time by using the cloud-end management platform, idle time periods of the electric power motion apparatus may be determined based on then lease information, time for replacing the battery of the electric power motion apparatus may be calculated based on the battery state, location where the battery of the electric power motion apparatus needs to be replaced may be determined based on the location information, and the electric power motion apparatus whose battery needs to be replaced, the time and location for replacing the battery are notified to a manager of the lease station. As such, the user may be prompted to timely return the electric power motion apparatus to the lease range, and the manager may timely replace the battery, such that the maintenance cost of the large-power battery is lowered. By the wireless network plus the lease application, the user may freely lease and return an electric power motion apparatus within the lease range without having to go far. In this way, the transportation workload is reduced, and the user experience is improved.

### BRIEF DESCRIPTION OF THE DRAWINGS

For clearer description of the technical solutions according to the embodiments of the present invention or in the related art, hereinafter, drawings that are to be referred for description of the embodiments or the related art are briefly described. Apparently, the drawings described hereinafter merely illustrate some embodiments of the present invention. Persons of ordinary skill in the art may also derive other drawings based on the drawings described herein without paying any creative effort.
FIG. 1 is a schematic diagram of a lease management system of an electric power motion apparatus according to an embodiment of the present invention; and
FIG. 2 is a flowchart of a lease management method of an electric power motion apparatus according to an embodiment of the present invention.

### DETAILED DESCRIPTION

For clearer description of the objectives, technical solutions and advantages of the embodiments of the present application clearer, the technical solutions according to the embodiments of the present invention are clearly and thoroughly described with reference to the accompanying drawings of the embodiments of the present invention. The described embodiments are merely exemplary ones, but are not all the embodiments of the present invention. Based on the embodiments of the present invention, all other embodiments derived by persons of ordinary skill in the art without any creative efforts shall fall within the protection scope of the present invention. As used in the embodiments of the present invention and the appended claims, the singular forms "a", "an" and "the" are intended to include the plural forms as well, unless the context clearly indicates otherwise.

An embodiment of the present invention provides a lease management system of an electric power motion apparatus. In practice, the electric power motion apparatus may be an electric scooter, especially a water electric scooter. Nevertheless, other electric power motion apparatuses, such as various electric entertainment devices that may be used on water or in the land, may also be included, as long as these devices are equipped with an electric propelling means and are steered within a specific range of a lease station, for example, small-sized motor boats or the like, which are not specifically limited herein. Different types of electric devices for lease may be equipped with a lease control module, and may be managed in a centralized manner in the lease management system of the electric power motion apparatus.

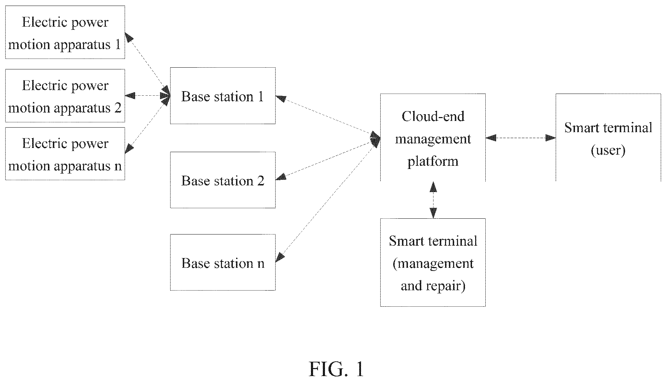

As illustrated in FIG. 1, the lease management system of an electric power motion apparatus includes: a base station deployed at a lease station, an electric power motion apparatus connected to the base station by long-distance wireless communication, a smart terminal where a lease application is installed, and a cloud-end management platform. In this embodiment, the lease station may be an area, for example, a beach; and the electric power motion apparatuses may be distributed in this area. Users may lease or return the electric power motion apparatuses in this area.

The electric power motion apparatus at the lease station is connected to the base station by long-distance wireless communication. In this embodiment, the long-distance wireless communication is preferably narrowband spread spectrum communication, to achieve a large coverage range. The base station is connected to a cloud-end management platform in the Internet via a wired or wireless network. A smart terminal of the user is connected to the cloud-end management platform via a lease application (APP) installed on the smart terminal, such that the user may be communicatively connected to the electric power motion apparatus at the lease station via the lease application.

The electric power motion apparatus includes: a battery pack, a power unit, a lease control unit, an auxiliary steering unit and a controller; wherein the battery pack is configured to supply power for the electric power motion apparatus; the power unit is connected to the battery pack, and configured to propel the electric power motion apparatus and control a speed of the electric power motion apparatus under cooperation of the controller; and the lease control unit is connected to the power unit and the auxiliary steering unit, and configured to acquire location information, an advancement direction and a battery state of the electric power motion apparatus, and additionally adjust and control the electric power motion apparatus under cooperation of the auxiliary steering unit based on normal adjustment and control.

It should be noted that relative to the prior art, a lease control unit is innovatively configured in the electric power motion apparatus according to the embodiment of the present invention. The lease control unit includes a central processing unit (CPU), a communication module, a global positioning system (GPS)-based positioning module, a direction checking module and a direction indicating module. The communication module is configured to communicate with the base station. The GPS-based positioning module is configured to acquire the location information of the electric power motion apparatus. The direction checking module is configured to acquire a current direction angle of advancement of the electric power motion apparatus by using a built-in direction sensor. The direction indicating module is configured to display a direction for returning to a lease station for the user, and the direction indicating module is preferably a light-emitting diode (LED) which serves as a direction indication lamp.

The power unit includes a power module and a power module lock. When the user unlocks the electric power motion apparatus within a lease duration, the power module lock is opened to enable the power module; and when the user returns the electric power motion apparatus, the power module lock is closed to disable the power module.

It should be noted that relative to the prior art, a lease application that may be installed on a smart terminal is innovatively configured according to the embodiment of the present invention. The lease application may include a user-specific lease application and a manager-specific lease application, which may be a user interface and a manager interface of the lease application, which are not specifically limited in the embodiment of the present invention.

The base station acquires in real time lease information, battery state and location information of the electric power motion apparatus, and reports the same to the cloud-end management platform. The cloud-end platform determines idle time periods of the electric power motion apparatus based on the lease information, calculates time for replacing a battery of the electric power motion apparatus based on the battery state, determines location where the battery of the electric power motion apparatus needs to be replaced, and notifies the electric power motion apparatus whose battery needs to be replaced, and the time and location for replacing the battery to a management and maintenance personnel at the lease station via the lease application.

The smart terminal where the lease application is installed is connected to the cloud-end management platform via the network; a user checks idle time periods of the electric power motion apparatus at the lease station via the lease application and reserves lease, and return the electric power motion apparatus via the lease application; and the manager of the lease station checks in real time the lease information, the battery state and the location information of the electric power motion apparatus at the lease station via the lease application, replaces the battery of the electric power motion apparatus based on the time and location notified by the cloud-end management platform, and performs lease management and maintenance of the electric power motion apparatus at the lease station.

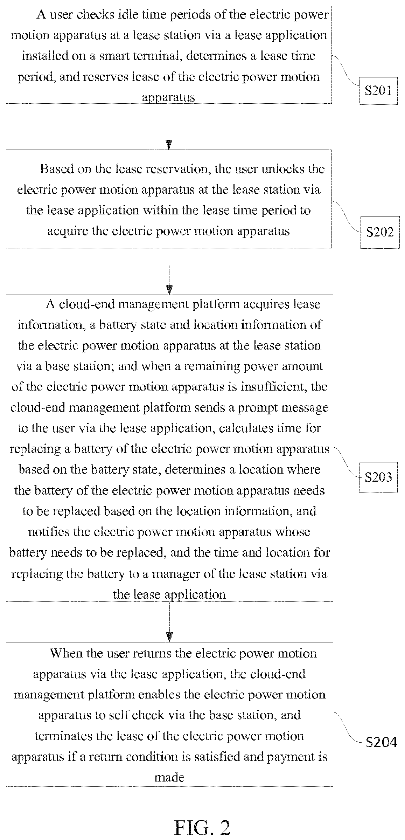

An embodiment of the present invention further provides a lease management method of an electric power motion apparatus. As illustrated in FIG. 2, the method includes the following steps:
Step S201: A user checks idle time periods of the electric power motion apparatus at a lease station via a lease application installed on a smart terminal, determines a lease time period, and reserves lease of the electric power motion apparatus.

In this step, a manager of the lease station predefines the idle time periods and a reservation coefficient of the idle time periods via the lease application installed on the smart terminal. The reservation coefficient is defined based on big data indicative of busy degree of the lease station; wherein the big data indicative of busy degree of the lease station is data statistically collected by the cloud-end management platform regarding lease quantity and use frequency of the electric power motion apparatus within the lease time period at the lease station.

In addition, the number of electric power motion apparatuses that are leaseable at the lease station within the idle time periods in the lease application installed on the smart terminal is calculated by: multiplying the number of actual idle electric power motion apparatuses at the lease station by the reservation coefficient of the idle time periods, or adding the number of actual idle electric power motion apparatuses at the lease station to the predefined number of reserved electric power motion apparatuses. In this way, based on the reservation coefficient and the number of reserved electric power motion apparatuses, the total number of electric power motion apparatuses to be reserved at the lease station may be controlled to not exceed the number of electric power motion apparatuses that are leaseable at the lease station.

The user checks the idle time periods of the electric power motion apparatus at the lease station via the lease application installed on the smart terminal, determines the lease time period, and reserves the lease of the electric power motion apparatus. With respect to lease reservation by the user, if electric power motion apparatuses of only one type are deployed at the lease station, the idle time periods thereof only needs to be distributed and one or a plurality of specific electric power motion apparatuses may not be locked, instead within a determined lease time period, one or a plurality of electric power motion apparatuses are reserved; and if electric power motion apparatuses of a plurality of types are deployed at the lease station, the user needs to determine the idle time periods and the types of the electric power motion apparatuses.

If the user successfully performs a lease reservation, the number of electric power motion apparatus that are leaseable is decreased within the corresponding idle time period. If the user cancels a lease reservation via the lease application, the number of electric power motion apparatuses that are leaseable is increased within the corresponding idle time period.

Step S202: Based on the lease reservation, the user unlocks the electric power motion apparatus at the lease station via the lease application within the lease time period to acquire the electric power motion apparatus.

The cloud-end management platform monitors the electric power motion apparatuses at various lease stations, and the battery states thereof, wherein the battery state includes a remaining power amount and a charge and recharge cycle count. In addition, the cloud-end management platform may also predict a user cycle of the battery and the like consumable accessory and the number of accessories to be replaced by collecting statistics for use time of the electric power motion apparatuses at each lease station, and arrange stock and transportation.

Within a predefined time duration before the lease time period, for example, half an hour before the lease time, a lease reservation prompt message is sent to the user via the lease application. When the user reaches the lease range of the lease station, the user is guided to a closest electric power motion apparatus based on real-time location information of the user and the location information of the electric power motion apparatus.

A lease identifier, for example, a two-dimensional code, is arranged on the electric power motion apparatus. When the user reaches before the electric power motion apparatus, the two-dimensional code of the electric power motion apparatus is scanned. If the lease application determines that the reservation is within the lease time period, the electric power motion apparatus is unlocked and timing is started such that the user uses the electric power motion apparatus within the lease time period. Specifically, the electric power motion apparatus may be unlocked by enabling a power motion lock of the electric power motion apparatus within the lease time.

Step S203: In use of the electric power motion apparatus, a cloud-end management platform acquires lease information, a battery state and location information of the electric power motion apparatus at the lease station via a base station; when the remaining power amount of the electric power motion apparatus is insufficient, the cloud-end management platform sends a prompt message to the user via the lease application, calculates time for replacing a battery of the electric power motion apparatus based on the battery state, determines a location where the battery of the electric power motion apparatus needs to be replaced based on the location information, and notifies the electric power motion apparatus whose battery needs to be replaced, and the time and location for replacing the battery to the manager of the lease station via the lease application.

In this step, in use of the electric power motion apparatus by the user, a lease control unit of the electric power motion apparatus acquires in real time the use time, location information and battery state of the electric power motion apparatus, and reports the same to the cloud-end management platform.

Based on the use time, the cloud-end management platform sends a return prompt message to the user when the predefined time duration before expiration of the lease time is reached. Based on the acquired location information, when the electric power motion apparatus is located outside the lease range of the lease station, a lease range prompt message is sent to the user, and based on normal adjustment and control of the user, the advancement direction of the electric power motion apparatus is additionally adjusted to face towards the lease station such that the electric power motion apparatus advances towards the lease application. Based on the acquired location information and battery state of the electric power motion apparatus, if the remaining power amount of the electric power motion apparatus is less than or equal to a sum of a power amount for returning to the lease station and a predefined remaining power amount, or the remaining power amount of the electric power motion apparatus approaches a minimum power amount for returning to the lease station, a prompt message indicative of an insufficient power amount is sent to the user, and based on normal adjustment and control, the electric power motion apparatus is additionally controlled to decelerate to a speed in a power saving mode, and the advancement direction of the electric power motion apparatus is additionally adjusted to face towards the lease station such that the electric power motion apparatus advances towards the lease station.

In addition, the cloud-end management platform calculates the time for replacing the battery of the electric power motion apparatus based on the battery state, determines the location where the battery of the electric power motion apparatus needs to be replaced based on the location information of the electric power motion apparatus, and notifies the electric power motion apparatus whose battery needs to be replaced, and the time and location for replacing the battery to the manager of the lease station via the lease application. Specifically, if the remaining power amount of the electric power motion apparatus is less than or equal to the sum of the power amount for returning to the lease station and the predefined remaining power amount, or the remaining power amount of the electric power motion apparatus is less than or equal to a product of the power amount for returning to the lease station and a predefined coefficient which is greater than or equal to 1, or the remaining power amount of the electric power motion apparatus approaches a minimum power amount for returning to a return range of the lease station, the cloud-end management platform sends a replace battery prompt message to the manager of the lease station via the lease application, such that the battery is timely replaced.

Step S204: When the user returns the electric power motion apparatus via the lease application, the cloud-end management platform enables the electric power motion apparatus to self check via the base station, and terminates the lease of the electric power motion apparatus if a return condition is satisfied and payment is made.

In this step, when the user returns the electric power motion apparatus to the lease station, and returns the electric power motion apparatus via the lease application, the cloud-end management platform sends a return instruction to the electric power motion apparatus upon receiving a return request message. Upon receiving the return instruction, the electric power motion apparatus performs self-check and terminates the timing. The self-check includes checking the battery state and integrity of the electronic part, for example, checking the battery state to determine whether to replace the battery, and checking integrity of the electronic part to determine whether the power motion is caught by water plants and needs to be cleared and maintained. If the return condition is satisfied, for example, the remaining power amount is greater than the predefined power amount and the electronic part operates properly, fees are calculated based on the use time and a payment procedure is started.

The payment procedure may include starting a deposit payment during the lease reservation, and completing the lease reservation procedure upon successful deposit payment. In returning of the electric power motion apparatus, if the return condition is satisfied, the use time is determined based on the time when the timing is started and the time when the timing is terminated, the fees are calculated based on the use time and a fees payment procedure is started, and the deposit is returned upon successful fees payment and hence the electric power motion apparatus is successfully leased. Nevertheless, the deposit payment procedure may not be used. Instead, the fees are calculated based on the use time and the fees payment is made after the electric power motion apparatus is returned, such that the electric power motion apparatus is successfully leased.

The specific technical details involved in the lease management method of the electric power motion apparatus are similar to those in the lease management system of the electric power motion apparatus. The technical effects achieved in the embodiments of the lease management system of the electric power motion apparatus are likewise achieved in the embodiments of the lease management method of the electric power motion apparatus. The details are not given herein any further for brevity. Correspondingly, the relevant technical details mentioned in the embodiments of the lease management method of the electric power motion apparatus may also be applied to the embodiments of the lease management system of the electric power motion apparatus.

Accordingly, in the lease management method and system of the electric power motion apparatus according to the embodiments of the present invention, with respect to the system, a base station is deployed at a lease station, an electric power motion apparatus at the lease station is connected to the base station by long-distance wireless communication, the base station is connected to a cloud-end management platform via a network, and thus user lease and lease management of the electric power motion apparatus at the lease station are practiced out via a lease application. In this way, the problems that operation cost of the electric power motion apparatuses currently using large power batteries in large-scale lease operation is high and user experience is poor are addressed. Lease information, battery state and location information of each electric power motion apparatus may be acquired in real time by using the cloud-end management platform, idle time periods of the electric power motion apparatus may be determined based on then lease information, time for replacing the battery of the electric power motion apparatus may be calculated based on the battery state, location where the battery of the electric power motion apparatus needs to be replaced may be determined based on the location information, and the electric power motion apparatus whose battery needs to be replaced, the time and location for replacing the battery are notified to a manager of the lease station. As such, the user may be prompted to timely return the electric power motion apparatus to the lease range, and the manager may timely replace the battery, such that the maintenance cost of the large-power battery is lowered. By the wireless network plus the lease application, the user may freely lease and return an electric power motion apparatus within the lease range without having to go far. In this way, the transportation workload is reduced, and the user experience is improved.

Various embodiments in the specification are described in a progressive manner. The same or similar parts between the embodiments may be referenced to each other. In each embodiment, the portion that is different from other embodiments is concentrated and described.

## Claims

1. A lease management system of an electric power motion apparatus, comprising: a base station deployed at a lease station, an electric power motion apparatus connected to the base station by long-distance wireless communication, a smart terminal where a lease application is installed, and a cloud-end management platform; wherein
the electric power motion apparatus is configured to be used on the water and is comprising:
a battery pack, a power unit, a lease control unit, an auxiliary steering unit, and a controller; wherein
the battery pack is configured to supply power for the electric power motion apparatus; the power unit is connected to the battery pack, and configured to propel the electric power motion apparatus and control a speed of the electric power motion apparatus under cooperation of the controller; and the lease control unit is connected to the power unit and the auxiliary steering unit, and configured to acquire a location information, an advancement direction and a battery state of the electric power motion apparatus, and configured to additionally adjust and control the electric power motion apparatus under cooperation of the auxiliary steering unit based on normal adjustment and control;
the lease control unit is comprising a communication module, a GPS-based positioning module, and a direction checking module; wherein
the communication module is configured to carry out the long-distance wireless communication with the base station, the GPS-based positioning module is configured to acquire the location information of the electric power motion apparatus, and the direction checking module is configured to acquire a direction angle of advancement of the electric power motion apparatus via a built-in direction sensor;
the base station is connected to the cloud-end management platform via a network, the base station is configured to acquire in real time lease information, the battery state and the location information of the electric power motion apparatus at the lease station, and report the same to the cloud-end management platform; and
the cloud-end management platform is configured to determine an idle time period of the electric power motion apparatus based on the lease information, calculate time for replacing the battery of the electric power motion apparatus based on the battery state, determine a location where the battery of the electric power motion apparatus needs to be replaced based on the location information, and notify the electric power motion apparatus whose battery needs to be replaced, and the time and location for replacing the battery to a manager of the lease station via the lease application, and when, based on the location information of the electric power motion apparatus, the electric power motion apparatus is located outside a predefined lease range of the lease station the cloud-end management platform is configured to send a return-to-lease-range prompt message to the user, and further, based on normal adjustment and control, by using the lease control unit of the electric power motion apparatus, the advancement direction of the electric power motion apparatus is additionally adjusted to face towards the lease station such that the electric power motion apparatus advances towards the lease station; and
the smart terminal where the lease application is installed is connected to the cloud-end management platform via the network; the user checks idle time periods of the electric power motion apparatus at the lease station via the lease application and reserves lease, and returns the electric power motion apparatus via the lease application; and
the manager of the lease station checks in real time the lease information, the battery state and the location information of the electric power motion apparatus at the lease station via the lease application, replaces the battery of the electric power motion apparatus based on the time and location notified by the cloud-end management platform, and performs lease management and maintenance of the electric power motion apparatus at the lease station.

2. The lease management system of an electric power motion apparatus according to claim 1, wherein
the power unit comprises a power module and a power module lock; wherein when the user unlocks the electric power motion apparatus within a lease duration, the power module lock is opened to enable the power module, and when the user returns the electric power motion apparatus, the power module lock is closed to disable the power module.

3. A lease management method of an electric power motion apparatus, comprising:
providing an electric power motion apparatus configured to be used on the water comprising:
a battery pack, a power unit, a lease control unit, an auxiliary steering unit, and a controller; wherein
the battery pack is configured to supply power for the electric power motion apparatus; the power unit is connected to the battery pack, and configured to propel the electric power motion apparatus and control a speed of the electric power motion apparatus under cooperation of the controller; and the lease control unit is connected to the power unit and the auxiliary steering unit, and configured to acquire a location information, an advancement direction and a battery state of the electric power motion apparatus, and configured to additionally adjust and control the electric power motion apparatus under cooperation of the auxiliary steering unit based on normal adjustment and control;
the lease control unit is comprising a communication module, a GPS-based positioning module, and a direction checking module; wherein
the communication module is configured to carry out long-distance wireless communication with a base station, the GPS-based positioning module is configured to acquire the location information of the electric power motion apparatus, and the direction checking module is configured to acquire a direction angle of advancement of the electric power motion apparatus via a built-in direction sensor
checking (S201), by the user, idle time periods of the electric power motion apparatus at a lease station via a lease application installed on a smart terminal, determining a lease time period, and reserving lease of the electric power motion apparatus;
based on the lease reservation, unlocking (S202), by the user, the electric power motion apparatus at the lease station via the lease application within the lease time period to acquire the electric power motion apparatus;
in use of the electric power motion apparatus on the water, acquiring (S203), by a cloud-end management platform, lease information, a battery state and location information of the electric power motion apparatus at the lease station via the base station;
when a remaining power amount of the electric power motion apparatus is insufficient, sending, by the cloud-end management platform, a prompt message to the user via the lease application, calculating time for replacing the battery of the electric power motion apparatus based on the battery state, determining a location where the battery of the electric power motion apparatus needs to be replaced based on the location information, and notifying the electric power motion apparatus whose battery needs to be replaced, and the time and location for replacing the battery to a manager of the lease station via the lease application, and based on the location information of the electric power motion apparatus, when the electric power motion apparatus is located outside a predefined lease range of the lease station, sending a return-to-lease-range prompt message to the user, and based on normal adjustment and control, by using the lease control unit of the electric power motion apparatus, additionally adjusting the advancement direction of the electric power motion apparatus to face towards the lease station and additionally controlling the electric power motion apparatus to advance towards the lease station; and
when the user returns (S204) the electric power motion apparatus via the lease application, enabling, by the cloud-end management platform, the electric power motion apparatus to self check via the base station, and terminating the lease of the electric power motion apparatus if a return condition is satisfied and payment is made.

4. The lease management method of an electric power motion apparatus according to claim 3, further comprising: predefining the idle time periods and a reservation coefficient of the idle time periods via the lease application installed on the smart terminal, the reservation coefficient being defined based on big data indicative of busy degree of the lease station; wherein the big data indicative of busy degree of the lease station is data statistically collected by the cloud-end management platform regarding lease quantity and use frequency of the electric power motion apparatus within the lease time period at the lease station; and
the number of electric power motion apparatuses that are leaseable at the lease station within the idle time periods in the lease application installed on the smart terminal is calculated by: multiplying the number of actual idle electric power motion apparatuses at the lease station by the reservation coefficient of the idle time periods.

5. The lease management method of an electric power motion apparatus according to claim 4, further comprising: if the cloud-end management platform receives the lease reservation, reducing the number of electric power motion apparatus that are leaseable in the lease reservations within a corresponding idle time period; and
if the cloud-end management platform receives cancellation of the lease reservation, increasing the number of electric power motion apparatuses that are leaseable in the lease reservations within the corresponding idle time period.

6. The lease management method of an electric power motion apparatus according to claim 5, further comprising: within a predefined time duration before the lease time period, sending, by the cloud-end management platform, a lease reservation prompt message to the user via the lease application;
after the user reaches the lease station, guiding, by the cloud-end management platform, the user to reach a closest electric power motion apparatus via the lease application based on location of the user and the location information of the electric power motion apparatus obtained in real time;
arranging a lease identifier on the electric power motion apparatus, and scanning the lease identifier by the smart terminal when the user reaches the electric power motion apparatus; and
unlocking the electric power motion apparatus and starting timing if it is determined via the lease application that the lease reservation is within the lease time period.

7. The lease management method of an electric power motion apparatus according to claim 6, further comprising: in use of the electric power motion apparatus, based on use time of the electric power motion apparatus, sending a return prompt message to the user via the lease application when the predefined time duration before expiration of the lease time is reached; and
based on the location information and the battery state of the electric power motion apparatus, if the remaining power amount of the electric power motion apparatus is less than or equal to a sum of a power amount for returning to the lease station and a predefined remaining power amount, sending a prompt message indicative of an insufficient power amount to the user, and based on normal adjustment and control, additionally controlling the electric power motion apparatus to decelerate to a speed in a power saving mode, and additionally adjusting the advancement direction of the electric power motion apparatus to face towards the lease station such that the electric power motion apparatus advances towards the lease station.

8. The lease management method of an electric power motion apparatus according to claim 7, wherein the calculating time for replacing a battery of the electric power motion apparatus based on the battery state comprises:
based on a power amount when the timing is started and the use time, calculating, by the cloud-end management platform, the remaining power amount of the electric power motion apparatus, and calculating the time for replacing the battery based on the remaining power amount.

9. The lease management method of an electric power motion apparatus according to claim 8, wherein the enabling the electric power motion apparatus to self check via the base station and terminating the lease of the electric power motion apparatus if a return condition is satisfied and payment is made when the user returns the electric power motion apparatus via the lease application comprises:
when the electric power motion apparatus returns to the lease station and is returned via the lease application, upon receiving a return request, sending, by the cloud-end management platform a return instruction to the electric power motion apparatus such that the electric power motion apparatus performs self-check and terminates the timing, wherein the self-check comprises checking the battery state and integrity of the electronic part; and
if the return condition is satisfied, determining the use time based on the time when the timing is started and the time when the timing is terminated, calculating fees based on the use time, paying the fees and terminating the lease of the electric power motion apparatus.

## Patentansprüche

1. Vermietungsmanagementsystem für eine Bewegungsvorrichtung mit elektrischer Energie, das Folgendes umfasst: eine Basisstation, die an einer Vermietungsstation eingesetzt wird, eine Bewegungsvorrichtung mit elektrischer Energie, die durch Fernbereichs-Drahtloskommunikation mit der Basisstation verbunden ist, ein intelligentes Endgerät, auf dem eine Vermietungsanwendung installiert ist, und eine Cloud-End-Managementplattform; wobei
die Bewegungsvorrichtung mit elektrischer Energie konfiguriert ist, auf dem Wasser verwendet zu werden, und Folgendes umfasst:
eine Batteriebaugruppe, eine Energieeinheit, eine Vermietungssteuereinheit, eine Hilfssteuereinheit und eine Steuereinrichtung; wobei
die Batteriebaugruppe konfiguriert ist, Energie für die Bewegungsvorrichtung mit elektrischer Energie bereitzustellen; die Energieeinheit mit der Batteriebaugruppe verbunden ist und konfiguriert ist, die Bewegungsvorrichtung mit elektrischer Energie voranzutreiben und eine Geschwindigkeit der Bewegungsvorrichtung mit elektrischer Energie im Zusammenwirken mit der Steuereinrichtung zu steuern; und die Vermietungssteuereinheit mit der Energieeinheit und der Hilfssteuereinheit verbunden ist und konfiguriert ist, Ortsinformationen, eine Fortbewegungsrichtung und einen Batteriezustand der Bewegungsvorrichtung mit elektrischer Energie zu erfassen, und konfiguriert ist, außerdem die Bewegungsvorrichtung mit elektrischer Energie im Zusammenwirken mit der Hilfssteuereinheit auf der Grundlage einer regulären Einstellung und Steuerung zu steuern;
die Vermietungssteuereinheit ein Kommunikationsmodul, ein GPSbasiertes Positionierungsmodul und ein Richtungsprüfmodul umfasst; wobei
das Kommunikationsmodul konfiguriert ist, die Fernbereichs-Drahtloskommunikation mit der Basisstation auszuführen, das GPS-basierte Positionierungsmodul konfiguriert ist, die Ortsinformationen der Bewegungsvorrichtung mit elektrischer Energie zu erfassen, und das Richtungsprüfmodul konfiguriert ist, über einen eingebauten Richtungssensor einen Richtungswinkel der Fortbewegung der Bewegungsvorrichtung mit elektrischer Energie zu erfassen;
wobei die Basisstation über ein Netz mit der Cloud-End-Managementplattform verbunden ist, die Basisstation konfiguriert ist, Vermietungsinformationen, den Batteriezustand und die Ortsinformationen der Bewegungsvorrichtung mit elektrischer Energie an der Vermietungsstation in Echtzeit zu erfassen und diese an die Cloud-End-Managementplattform zu melden; und
die Cloud-End-Managementplattform konfiguriert ist, auf der Grundlage der Vermietungsinformationen einen nicht belegten Zeitraum der Bewegungsvorrichtung mit elektrischer Energie zu bestimmen, die Zeit zum Austauschen der Batterie der Bewegungsvorrichtung mit elektrischer Energie auf der Grundlage des Batteriezustands zu berechnen, auf der Grundlage der Ortinformationen einen Ort zu bestimmen, an dem die Batterie der Bewegungsvorrichtung mit elektrischer Energie ausgetauscht werden muss, und die Bewegungsvorrichtung mit elektrischer Energie, deren Batterie ausgetauscht werden muss, zu benachrichtigen und die Zeit und den Ort zum Austauschen der Batterie über die Vermietungsanwendung einem Manager der Vermietungsstation zu melden, und dann, wenn die Bewegungsvorrichtung mit elektrischer Energie auf der Grundlage der Ortsinformationen der Bewegungsvorrichtung mit elektrischer Energie außerhalb eines vorgegebenen Vermietungsbereichs der Vermietungsstation angeordnet ist, die Cloud-End-Managementplattform konfiguriert ist, eine Aufforderungsnachricht, zum Vermietungsbereich zurückzukehren, an den Benutzer zu senden, und ferner auf der Grundlage einer regulären Einstellung und Steuerung unter Verwendung der Vermietungssteuereinheit der Bewegungsvorrichtung mit elektrischer Energie die Fortbewegungsrichtung der Bewegungsvorrichtung mit elektrischer Energie außerdem derart eingestellt wird, dass sie in Richtung der Vermietungsstation orientiert ist, derart, dass sich die Bewegungsvorrichtung mit elektrischer Energie in Richtung der Vermietungsstation fortbewegt; und
das intelligente Endgerät, auf dem die Vermietungsanwendung installiert ist, über das Netz mit der Cloud-End-Managementplattform verbunden ist; der Benutzer über die Vermietungsanwendung nicht belegte Zeiträume der Bewegungsvorrichtung mit elektrischer Energie an der Vermietungsstation prüft und eine Vermietung reserviert und die Bewegungsvorrichtung mit elektrischer Energie über die Vermietungsanwendung zurückgibt; und
der Manager der Vermietungsstation die Vermietungsinformationen, den Batteriezustand und die Ortsinformationen der Bewegungsvorrichtung mit elektrischer Energie an der Vermietungsstation über die Vermietungsanwendung in Echtzeit prüft, die Batterie der Bewegungsvorrichtung mit elektrischer Energie auf der Grundlage der Zeit und des Ortes, die durch die Cloud-End-Managementplattform gemeldet werden, austauscht und Vermietungsmanagement und Wartung der Bewegungsvorrichtung mit elektrischer Energie an der Vermietungsstation durchführt.

2. Vermietungsmanagementsystem für eine Bewegungsvorrichtung mit elektrischer Energie nach Anspruch 1, wobei
die Energieeinheit ein Energiemodul und eine Energiemodulsperre umfasst; wobei dann, wenn der Benutzer die Bewegungsvorrichtung mit elektrischer Energie innerhalb einer Vermietungsdauer entsperrt, die Energiemodulsperre geöffnet wird, um das Energiemodul zu aktivieren, und dann, wenn der Benutzer die Bewegungsvorrichtung mit elektrischer Energie zurückgibt, die Energiemodulsperre geschlossen wird, um das Energiemodul zu deaktivieren.

3. Vermietungsmanagementverfahren für eine Bewegungsvorrichtung mit elektrischer Energie, das Folgendes umfasst:
Bereitstellen einer Bewegungsvorrichtung mit elektrischer Energie, die konfiguriert ist, auf dem Wasser verwendet zu werden, die Folgendes umfasst:
eine Batteriebaugruppe, eine Energieeinheit, eine Vermietungssteuereinheit, eine Hilfssteuereinheit und eine Steuereinrichtung; wobei
die Batteriebaugruppe konfiguriert ist, Energie für die Bewegungsvorrichtung mit elektrischer Energie bereitzustellen; die Energieeinheit mit der Batteriebaugruppe verbunden ist und konfiguriert ist, die Bewegungsvorrichtung mit elektrischer Energie voranzutreiben und eine Geschwindigkeit der Bewegungsvorrichtung mit elektrischer Energie im Zusammenwirken mit der Steuereinrichtung zu steuern; und die Vermietungssteuereinheit mit der Energieeinheit und der Hilfssteuereinheit verbunden ist und konfiguriert ist, Ortsinformationen, eine Fortbewegungsrichtung und einen Batteriezustand der Bewegungsvorrichtung mit elektrischer Energie zu erfassen, und konfiguriert ist, außerdem die Bewegungsvorrichtung mit elektrischer Energie im Zusammenwirken mit der Hilfssteuereinheit auf der Grundlage einer regulären Einstellung und Steuerung zu steuern;
die Vermietungssteuereinheit ein Kommunikationsmodul, ein GPSbasiertes Positionierungsmodul und ein Richtungsprüfmodul umfasst; wobei
das Kommunikationsmodul konfiguriert ist, eine Fernbereichs-Drahtloskommunikation mit einer Basisstation auszuführen, das GPS-basierte Positionierungsmodul konfiguriert ist, die Ortsinformationen der Bewegungsvorrichtung mit elektrischer Energie zu erfassen, und das Richtungsprüfmodul konfiguriert ist, über einen eingebauten Richtungssensor einen Richtungswinkel der Fortbewegung der Bewegungsvorrichtung mit elektrischer Energie zu erfassen;
Prüfen (S201) von nicht belegten Zeiträumen der Bewegungsvorrichtung mit elektrischer Energie an einer Vermietungsstation über eine Vermietungsanwendung, die auf einem intelligenten Endgerät installiert ist, Bestimmen eines Vermietungszeitraums und Reservieren der Vermietung der Bewegungsvorrichtung mit elektrischer Energie durch den Benutzer;
auf der Grundlage der Vermietungsreservierung, Entsperren (S202) der Bewegungsvorrichtung mit elektrischer Energie an der Vermietungsstation über die Vermietungsanwendung innerhalb des Vermietungszeitraums durch den Benutzer, um in den Besitz der Bewegungsvorrichtung mit elektrischer Energie zu gelangen;
beim Gebrauch der Bewegungsvorrichtung mit elektrischer Energie auf dem Wasser, Erfassen (S203) von Vermietungsinformationen, eines Batteriezustands und Ortsinformationen der Bewegungsvorrichtung mit elektrischer Energie durch eine Cloud-End-Managementplattform an der Vermietungsstation über die Basisstation;
dann, wenn eine restliche Energiemenge der Bewegungsvorrichtung mit elektrischer Energie unzureichend ist, Senden einer Aufforderungsnachricht durch die Cloud-End-Managementplattform über die Vermietungsanwendung an den Benutzer, Berechnen der Zeit zum Austauschen der Batterie der Bewegungsvorrichtung mit elektrischer Energie auf der Grundlage des Batteriezustands, Bestimmen eines Ortes, an dem die Batterie der Bewegungsvorrichtung mit elektrischer Energie ausgetauscht werden muss, auf der Grundlage der Ortsinformationen und Benachrichtigen der Bewegungsvorrichtung mit elektrischer Energie, deren Batterie ausgetauscht werden muss, und Melden der Zeit und des Ortes zum Austauschen der Batterie über die Vermietungsanwendung an einen Manager der Vermietungsstation und dann, wenn die Bewegungsvorrichtung mit elektrischer Energie auf der Grundlage der Ortsinformationen der Bewegungsvorrichtung mit elektrischer Energie außerhalb eines vorgegebenen Vermietungsbereichs der Vermietungsstation angeordnet ist, Senden einer Aufforderungsnachricht, zum Vermietungsbereich zurückzukehren, an den Benutzer und auf der Grundlage einer regulären Einstellung und Steuerung, unter Verwendung der Vermietungssteuereinheit der Bewegungsvorrichtung mit elektrischer Energie, außerdem Einstellen der Fortbewegungsrichtung der Bewegungsvorrichtung mit elektrischer Energie, derart, dass sie in Richtung der Vermietungsstation orientiert ist, und außerdem Steuern der Bewegungsvorrichtung mit elektrischer Energie, derart, dass sie sich in Richtung der Vermietungsstation fortbewegt; und
dann, wenn der Benutzer die Bewegungsvorrichtung mit elektrischer Energie über die Vermietungsanwendung zurückgibt (S204), Aktivieren der Bewegungsvorrichtung mit elektrischer Energie durch die Cloud-End-Managementplattform über die Basisstation zur Selbstprüfung und Beenden der Vermietung der Bewegungsvorrichtung mit elektrischer Energie, wenn eine Rückgabebedingung erfüllt ist und die Bezahlung durchgeführt worden ist.

4. Vermietungsmanagementverfahren für eine Bewegungsvorrichtung mit elektrischer Energie nach Anspruch 3, das ferner Folgendes umfasst: Definieren vorab der nicht belegten Zeiträume und eines Reservierungskoeffizienten der nicht belegten Zeiträume über die Vermietungsanwendung, die auf dem intelligenten Endgerät installiert ist, wobei der Reservierungskoeffizient auf der Grundlage von Massendaten definiert wird, die einen Belegungsgrad der Vermietungsstation angeben; wobei die Massendaten, die den Belegungsgrad der Vermietungsstation angeben, Daten sind, die durch die Cloud-End-Managementplattform bezüglich Anzahl der Vermietungen und Nutzungshäufigkeit der Bewegungsvorrichtung mit elektrischer Energie innerhalb des Vermietungszeitraums an der Vermietungsstation statistisch erfasst werden; und
wobei die Anzahl der Bewegungsvorrichtungen mit elektrischer Energie, die an der Vermietungsstation innerhalb der nicht belegten Zeiträume in der Vermietungsanwendung, die auf dem intelligenten Endgerät installiert ist, gemietet werden können, berechnet wird durch: Multiplizieren der Anzahl der gegenwärtig nicht belegten Bewegungsvorrichtungen mit elektrischer Energie an der Vermietungsstation mit dem Reservierungskoeffizienten der nicht belegten Zeiträume.

5. Vermietungsmanagementverfahren für eine Bewegungsvorrichtung mit elektrischer Energie nach Anspruch 4, das ferner Folgendes umfasst: dann, wenn die Cloud-End-Managementplattform die Vermietungsreservierung empfängt, Verringern der Anzahl der Bewegungsvorrichtungen mit elektrischer Energie, die in den Vermietungsreservierungen innerhalb eines entsprechenden nicht belegten Zeitraums gemietet werden können; und
dann, wenn die Cloud-End-Managementplattform eine Stornierung der Vermietungsreservierung empfängt, Erhöhen der Anzahl der Bewegungsvorrichtungen mit elektrischer Energie, die in den Vermietungsreservierungen innerhalb des entsprechenden nicht belegten Zeitraums gemietet werden können.

6. Vermietungsmanagementverfahren für eine Bewegungsvorrichtung mit elektrischer Energie nach Anspruch 5, das ferner Folgendes umfasst: innerhalb einer vorgegebenen Zeitdauer vor dem Vermietungszeitraum, Senden einer Vermietungsreservierungs-Aufforderungsnachricht durch die Cloud-End-Managementplattform über die Vermietungsanwendung an den Benutzer;
nachdem der Benutzer die Vermietungsstation erreicht hat, Anleiten des Benutzers durch die Cloud-End-Managementplattform, eine am nächsten befindliche Bewegungsvorrichtung mit elektrischer Energie zu erreichen, über die Vermietungsanwendung auf der Grundlage des Ortes des Benutzers und der Ortsinformationen der Bewegungsvorrichtung mit elektrischer Energie, die in Echtzeit erhalten werden;
Anordnen einer Vermietungskennung auf der Bewegungsvorrichtung mit elektrischer Energie und Einscannen der Vermietungskennung durch das intelligente Endgerät, wenn der Benutzer die Bewegungsvorrichtung mit elektrischer Energie erreicht; und
Entsperren der Bewegungsvorrichtung mit elektrischer Energie und Starten der Zeiterfassung, wenn über die Vermietungsanwendung bestimmt wird, dass die Vermietungsreservierung innerhalb des Vermietungszeitraums liegt.

7. Vermietungsmanagementverfahren für eine Bewegungsvorrichtung mit elektrischer Energie nach Anspruch 6, das ferner Folgendes umfasst: beim Gebrauch der Bewegungsvorrichtung mit elektrischer Energie, auf der Grundlage der Nutzungszeit der Bewegungsvorrichtung mit elektrischer Energie, Senden einer Rückkehraufforderungsnachricht über die Vermietungsanwendung an den Benutzer, wenn die vorgegebene Zeitdauer vor dem Ablauf der Vermietungszeit erreicht ist; und
dann, wenn die restliche Energiemenge der Bewegungsvorrichtung mit elektrischer Energie auf der Grundlage der Ortsinformationen und des Batteriezustands der Bewegungsvorrichtung mit elektrischer Energie kleiner oder gleicheiner Summe einer Energiemenge zum Zurückkehren zur Vermietungsstation und einer vorgegebenen restlichen Energiemenge ist, Senden einer Aufforderungsnachricht, die eine unzureichende Energiemenge angibt, an den Benutzer und auf der Grundlage einer regulären Einstellung und Steuerung, außerdem Steuern der Bewegungsvorrichtung mit elektrischer Energie, derart, dass sie auf eine Geschwindigkeit in einer Energiesparbetriebsart verlangsamt wird, und außerdem Einstellen der Fortbewegungsrichtung der Bewegungsvorrichtung mit elektrischer Energie, derart, dass sie in Richtung der Vermietungsstation orientiert ist, derart dass sich die Bewegungsvorrichtung mit elektrischer Energie in Richtung der Vermietungsstation fortbewegt.

8. Vermietungsmanagementverfahren für eine Bewegungsvorrichtung mit elektrischer Energie nach Anspruch 7, wobei das Berechnen der Zeit zum Austauschen einer Batterie der Bewegungsvorrichtung mit elektrischer Energie auf der Grundlage des Batteriezustands Folgendes umfasst:
auf der Grundlage einer Energiemenge, wenn die Zeiterfassung gestartet worden ist, und der Nutzungszeit, Berechnen der restlichen Energiemenge der Bewegungsvorrichtung mit elektrischer Energie und Berechnen der Zeit zum Austauschen der Batterie auf der Grundlage der restlichen Energiemenge durch die Cloud-End-Managementplattform.

9. Vermietungsmanagementverfahren für eine Bewegungsvorrichtung mit elektrischer Energie nach Anspruch 8, wobei das Aktivieren der Bewegungsvorrichtung mit elektrischer Energie zur Selbstprüfung über die Basisstation und das Beenden der Vermietung der Bewegungsvorrichtung mit elektrischer Energie, wenn eine Rückgabebedingung erfüllt ist und die Bezahlung durchgeführt worden ist, wenn der Benutzer die Bewegungsvorrichtung mit elektrischer Energie über die Vermietungsanwendung zurückgibt, Folgendes umfasst:
dann, wenn die Bewegungsvorrichtung mit elektrischer Energie zur Vermietungsstation zurückkehrt und über die Vermietungsanwendung zurückgegeben wird, aufgrund des Empfangens einer Rückgabeanfrage, Senden einer Rückgabeanweisung durch die Cloud-End-Managementplattform an die Bewegungsvorrichtung mit elektrischer Energie, derart, dass die Bewegungsvorrichtung mit elektrischer Energie eine Selbstprüfung durchführt und die Zeiterfassung beendet, wobei die Selbstprüfung das Prüfen des Batteriezustands und der Integrität der elektronischen Komponente umfasst; und
dann, wenn die Rückgabebedingung erfüllt ist, Bestimmen der Nutzungszeit auf der Grundlage der Zeit, wenn die Zeiterfassung gestartet worden ist, und der Zeit, wenn die Zeiterfassung beendet worden ist, Berechnen von Gebühren auf der Grundlage der Nutzungszeit, Bezahlen der Gebühren und Beenden der Vermietung der Bewegungsvorrichtung mit elektrischer Energie.

## Revendications

1. Système de gestion de location d'un appareil de déplacement à puissance électrique, comprenant : une station de base déployée au niveau d'une station de location, un appareil de déplacement à puissance électrique connecté à la station de base via une communication sans fil longue distance, un terminal intelligent dans lequel une application de location est installée, et une plate-forme de gestion en nuage ; dans lequel
l'appareil de déplacement à puissance électrique est configuré pour être utilisé sur l'eau et comprend : un bloc batterie, une unité de puissance, une unité de commande de location, une unité de direction auxiliaire, et un contrôleur ; dans lequel
le bloc batterie est configuré pour alimenter une puissance à l'appareil de déplacement à puissance électrique ; l'unité de puissance est connectée au bloc batterie, et est configurée pour propulser l'appareil de déplacement à puissance électrique et pour commander une vitesse de l'appareil de déplacement à puissance électrique en coopération avec le contrôleur ; et l'unité de commande de location est connectée à l'unité de puissance et à l'unité de direction auxiliaire, et est configurée pour acquérir des informations d'emplacement, une direction d'avance et un état de batterie de l'appareil de déplacement à puissance électrique, et est configurée pour ajuster et commander additionnellement l'appareil de déplacement à puissance électrique en coopération avec l'unité de direction auxiliaire sur la base d'un ajustement et d'une commande normaux ;
l'unité de commande de location comprend un module de communication, un module de positionnement basé sur GPS, et un module de vérification de direction ; dans lequel
le module de communication est configuré pour exécuter la communication sans fil longue distance avec la station de base, le module de positionnement basé sur GPS est configuré pour acquérir les informations d'emplacement de l'appareil de déplacement à puissance électrique, et le module de vérification de direction est configuré pour acquérir un angle de direction d'avance de l'appareil de déplacement à puissance électrique via un capteur de direction intégré ;
la station de base est connectée à la plate-forme de gestion en nuage via un réseau, la station de base est configurée pour acquérir des informations de location en temps réel, l'état de la batterie et les informations d'emplacement de l'appareil de déplacement à puissance électrique au niveau de la station de location, et pour les rapporter à la plate-forme de gestion en nuage ; et
la plate-forme de gestion en nuage est configurée pour déterminer une période d'inactivité de l'appareil de déplacement à puissance électrique sur la base des informations de location, pour calculer un temps de remplacement de la batterie de l'appareil de déplacement à puissance électrique sur la base de l'état de batterie, pour déterminer un emplacement auquel la batterie de l'appareil de déplacement à puissance électrique a besoin d'être remplacée sur la base des informations d'emplacement, et pour notifier à un gestionnaire de la station de location, via l'application de location, l'appareil de déplacement à puissance électrique dont la batterie a besoin d'être remplacée, et le temps et l'emplacement de remplacement la batterie, et quand, sur la base des informations d'emplacement de l'appareil de déplacement à puissance électrique, l'appareil de déplacement à puissance électrique est situé à l'extérieur d'une plage de location prédéfinie de la station de location, la plate-forme de gestion en nuage est configurée pour envoyer à l'utilisateur un message d'invitation de retour à la plage de location, et en outre, sur la base d'un ajustement et d'une commande normaux, en utilisant l'unité de commande de location de l'appareil de déplacement à puissance électrique, la direction d'avance de l'appareil de déplacement à puissance électrique est ajustée additionnellement pour être tournée vers la station de base de telle sorte que l'appareil de déplacement à puissance électrique avance vers la station de base ; et
le terminal intelligent dans lequel l'application de location est installée est connecté à la plate-forme de gestion en nuage via le réseau ; l'utilisateur vérifie les périodes d'inactivité de l'appareil de déplacement à puissance électrique au niveau de la station de location via l'application de location et réserves une location, et retourne l'appareil de déplacement à puissance électrique via l'application de location ; et
le gestionnaire de la station de location vérifie en temps réel les informations de location, l'état de batterie et les informations d'emplacement de l'appareil de déplacement à puissance électrique au niveau de la station de location via l'application de location, remplace la batterie de l'appareil de déplacement à puissance électrique sur la base du temps et de l'emplacement notifiés par la plate-forme de gestion en nuage, et effectue une gestion et une maintenance de location de l'appareil de déplacement à puissance électrique au niveau de la station de location.

2. Système de gestion de location d'un appareil de déplacement à puissance électrique selon la revendication 1, dans lequel
l'unité de puissance comprend un module de puissance et un verrouillage de module de puissance ; dans lequel, quand l'utilisateur déverrouille l'appareil de déplacement à puissance électrique à l'intérieur d'une durée de location, le verrouillage de module de puissance est ouvert pour activer le module de puissance, et quand l'utilisateur retourne l'appareil de déplacement à puissance électrique, le verrouillage de module de puissance est fermé pour désactiver le module de puissance.

3. Procédé de gestion de location d'un appareil de déplacement à puissance électrique, comprenant les étapes consistant à :
fournir un appareil de déplacement à puissance électrique configurée pour être utilisé sur l'eau comprenant :
un bloc batterie, une unité de puissance, une unité de commande auxiliaire, une unité de direction auxiliaire, et un contrôleur ; dans lequel
le bloc batterie est configuré pour alimenter une puissance pour l'appareil de déplacement à puissance électrique ; l'unité de puissance est connectée au bloc batterie, et est configurée pour propulser l'appareil de déplacement à puissance électrique et pour commander une vitesse de l'appareil de déplacement à puissance électrique en coopération avec le contrôleur ; et
l'unité de commande de location est connectée à l'unité de puissance et à l'unité de direction auxiliaire, et est configurée pour acquérir des informations de location, une direction d'avance et un état de batterie de l'appareil de déplacement à puissance électrique, et est configurée pour ajuster et commander additionnellement l'appareil de déplacement à puissance électrique en coopération avec l'unité de direction auxiliaire sur la base d'un ajustement et d'une commande normaux ;
l'unité de commande de location comprend un module de communication, un module de positionnement basé sur GPS, et un module de vérification de direction ; dans lequel
le module de communication est configuré pour exécuter la communication sans fil longue distance avec une station de base, le module de positionnement basé sur GPS est configuré pour acquérir les informations d'emplacement de l'appareil de déplacement à puissance électrique, et le module de vérification de direction est configuré pour acquérir un angle de direction d'avance de l'appareil de déplacement à puissance électrique via un capteur de direction intégré ;
vérifier (S201), via l'utilisateur, les périodes d'inactivité de l'appareil de déplacement à puissance électrique au niveau d'une station de location via une application de location installée sur un terminal intelligent, déterminer une période de location, et réserver une location de l'appareil de déplacement à puissance électrique ;
sur la base de la réservation de location, déverrouiller (S202), via l'utilisateur, l'appareil de déplacement à puissance électrique au niveau de la station de location via l'application de location à l'intérieur de la période de location pour acquérir l'appareil de déplacement à puissance électrique ;
lors de l'utilisation de l'appareil de déplacement à puissance électrique sur l'eau, acquérir (S203), via une plate-forme de gestion en nuage, des informations de location, un état de batterie et des informations d'emplacement de l'appareil de déplacement à puissance électrique au niveau de la station de location via la station de base ;
quand une quantité de puissance restante de l'appareil de déplacement à puissance électrique est insuffisante, envoyer, via la plate-forme de gestion en nuage, un message d'invitation à l'utilisateur via l'application de location, calculer un temps de remplacement de la batterie de l'appareil de déplacement à puissance électrique sur la base de l'état de batterie, déterminer un emplacement auquel la batterie de l'appareil de déplacement à puissance électrique a besoin d'être remplacée sur la base des informations d'emplacement, et notifier à un gestionnaire de la station location, via l'application de location, l'appareil de déplacement à puissance électrique dont la batterie a besoin d'être remplacée, et le temps et l'emplacement de remplacement de la batterie, et quand, sur la base des informations d'emplacement de l'appareil de déplacement à puissance électrique, l'appareil de déplacement à puissance électrique est situé à l'extérieur d'une plage de location prédéfinie de la station de location, envoyer à l'utilisateur un message d'invitation de retour à la plage de location, et sur la base d'un ajustement et d'une commande normaux, en utilisant l'unité de commande de location de l'appareil de déplacement à puissance électrique, ajuster additionnellement la direction d'avance de l'appareil de déplacement à puissance électrique et ajuster additionnellement la direction d'avance de l'appareil de déplacement à puissance électrique pour qu'elle soit tournée vers la station de location et commander additionnellement l'appareil de déplacement à puissance électrique pour qu'il avance vers la station de location ; et
quand l'utilisateur retourne (S204) l'appareil de déplacement à puissance électrique via l'application de location, permettre, via la plate-forme de gestion en nuage, à l'appareil de déplacement à puissance électrique d'effectuer une auto-vérification via la station de base, et mettre un terme à la location de l'appareil de déplacement à puissance électrique si une condition de retour est satisfaite et un paiement est réalisé.

4. Procédé de gestion de location d'un appareil de déplacement à puissance électrique selon la revendication 3, comprenant en outre l'étape consistant à : prédéfinir les périodes d'inactivité et un coefficient de réservation des périodes d'inactivité via l'application de location installée sur le terminal intelligent, le coefficient de réservation étant défini sur la base de mégadonnées indiquant un degré d'occupation de la station de location ; dans lequel les mégadonnées indiquant un degré d'occupation de la station de location sont des données collectées statistiquement par la plate-forme de gestion en nuage concernant une quantité de location et une fréquence d'utilisation de l'appareil de déplacement à puissance électrique à l'intérieur de la période de location au niveau de la station de location ; et
le nombre d'appareils de déplacement à puissance électrique pouvant être loués au niveau de la station de location à l'intérieur des périodes d'inactivité dans l'application de location installée sur le terminal intelligent est calculé en : multipliant le nombre d'appareils de déplacement à puissance électrique réellement inactifs au niveau de la station de base par le coefficient de réservation des périodes d'inactivité.

5. Procédé de gestion de location d'un appareil de déplacement à puissance électrique selon la revendication 4, comprenant en outre les étapes consistant à : si la plate-forme de gestion en nuage reçoit la réservation de location, réduire le nombre d'appareils de déplacement à puissance électrique pouvant être loués dans les réservations de location à intérieur d'une période d'inactivité correspondante ; et
si la plate-forme de gestion en nuage reçoit une annulation de la réservation de location, augmenter le nombre d'appareils de déplacement à puissance électrique pouvant être loués dans les réservations de location à l'intérieur de la période d'inactivité correspondante.

6. Procédé de gestion de location d'un appareil de déplacement à puissance électrique selon la revendication 5, comprenant en outre les étapes consistant à : à l'intérieur d'une durée prédéfinie avant la période de location, envoyer, via la plate-forme de gestion en nuage, un message d'invitation de réservation de location à l'utilisateur via l'application de location ;
après que l'utilisateur a atteint la station de location, guider, via la plate-forme de gestion en nuage, l'utilisateur pour qu'il atteigne un appareil de déplacement à puissance électrique le plus proche via l'application de location sur la base d'un emplacement de l'utilisateur et des informations d'emplacement de l'appareil de déplacement à puissance électrique obtenues en temps réel ;
agencer un identifiant de location sur l'appareil de déplacement à puissance électrique, et scanner identifiant de location par l'intermédiaire du terminal intelligent quand l'utilisateur atteint l'appareil de déplacement à puissance électrique ; et
déverrouiller l'appareil de déplacement à puissance électrique et démarrer la temporisation s'il est déterminé via l'application de location que la réservation de location est à l'intérieur de la période de location.

7. Procédé de gestion de location d'un appareil de déplacement à puissance électrique selon la revendication 6, comprenant en outre les étapes consistant à : lors de l'utilisation de l'appareil de déplacement à puissance électrique, sur la base d'un temps d'utilisation de l'appareil de déplacement à puissance électrique, envoyer un message d'invitation de retour à l'utilisateur via l'application de location quand la durée prédéfinie avant expiration du temps de location est atteinte ; et
sur la base des informations d'emplacement et de l'état de batterie de l'appareil de déplacement à puissance électrique, si la quantité de puissance restante de l'appareil de déplacement à puissance électrique est inférieure ou égale à une somme d'une quantité de puissance pour retourner à la station de location et d'une quantité de puissance restante, envoyer à l'utilisateur un message d'invitation indiquant une quantité de puissance insuffisante, et sur la base d'un ajustement et d'une commandes normaux, commander additionnellement l'appareil de déplacement à puissance électrique pour qu'il décélère à une vitesse dans un mode d'économie de puissance, et à ajuster additionnellement la direction d'avance de l'appareil de déplacement à puissance électrique pour qu'elle soit tournée vers la station de location de telle sorte que l'appareil de déplacement à puissance électrique avance vers la station de location.

8. Procédé de gestion de location d'un appareil de déplacement à puissance électrique selon la revendication 7, dans lequel le temps de calcul pour remplacer une batterie de l'appareil de déplacement à puissance électrique sur la base de l'état de batterie comprend :
sur la base d'une quantité de puissance au moment où la temporisation est démarrée et sur la base du temps d'utilisation, calculer, via la plate-forme de gestion en nuage, la quantité de puissance restante de l'appareil de déplacement à puissance électrique, et calculer le temps de remplacement de la batterie sur la base de la quantité de puissance restante.

9. Procédé de gestion de location d'un appareil de déplacement à puissance électrique selon la revendication 8, dans lequel l'tapes consistant à activer l'appareil de déplacement à puissance électrique pour une auto-vérification via la station de base et à mettre un terme à la location de l'appareil de déplacement à puissance électrique si une condition de retour est satisfaite et si un paiement est réalisé quand l'utilisateur retourne l'appareil de déplacement à puissance électrique via l'application de location comprend de :
quand l'appareil de déplacement à puissance électrique retourne à la station de location et est retourné via l'application de location, lors d'une réception d'une requête de retour, envoyer, via la plate-forme de gestion en nuage, une instruction de retour à l'appareil de déplacement à puissance électrique de telle sorte que l'appareil de déplacement à puissance électrique effectue une auto-vérification et termine la temporisation, l'auto-vérification comprenant de vérifier l'état de batterie et l'intégrité de la partie électronique ; et
si la condition de retour est satisfaite, déterminer le temps d'utilisation sur la base du moment où la temporisation est démarrée et du moment où la temporisation est terminée, calculer des frais sur la base du temps d'utilisation, payer les frais et déterminer la location de l'appareil de déplacement à puissance électrique.
